Europäisches Patentamt

European Patent Office

Office européen des brevets

(11) Publication number: **0 125 057**

**A2**

(12) # EUROPEAN PATENT APPLICATION

(21) Application number: **84302589.1**

(22) Date of filing: **16.04.84**

(51) Int. Cl.³: **F 16 L 33/20**

(30) Priority: **02.05.83 US 490630**

(43) Date of publication of application:
**14.11.84 Bulletin 84/46**

(84) Designated Contracting States:
**DE FR GB**

(71) Applicant: **PARKER HANNIFIN CORPORATION**
**17325 Euclid Avenue**
**Cleveland Ohio 44112(US)**

(72) Inventor: **Burrington, George C.**
**15720 Holmes**
**Cleveland Ohio 44110(US)**

(74) Representative: **Purvis, William Michael Cameron et al,**
**D. Young & Co. 10 Staple Inn**
**London WC1V 7RD(GB)**

(54) Hydraulic hose coupling.

(57) A permanently attachable coupling (10) for a high pressure multiple layer wire reinforced hydraulic hose (11) in which the grip on the hose (11) is achieved by the penetration of plural gripping teeth (44) through the cover (22) of the hose (11) directly into engagement with the wire reinforcement (21). The coupling (10) includes an overlapped (16, 18) shell arrangement in the region of at least one gripping tooth (45) to provide a deeper penetration of that tooth (45) into the reinforcement structure (21) when the shell (16, 18) is crimped into engagement with the hose (11). The nipple structure of the coupling (10) includes an annular gripping ridge (31) in the region of the overlap (16, 18) which produces a pincer-like grip upon the hose (11).

Fig. 2

1

# HYDRAULIC HOSE COUPLING

The invention relates to permanently attachable hydraulic hose couplings and more particularly to a crimp type coupling particularly suited for high pressure, multiple wire ply hoses.

The high pressure hose coupling field has received much attention in the past but currently is even more emphasized in the need for higher pressure requirements in large size hoses. In particular it is desirable to be able to obtain a reliable junction between the hose and coupling in a satisfactory manner and to be able to achieve such connection in a field environment which will duplicate that type of connection which might be made in a factory assembly. Still further it is desired to make such a connection in which no special preparation is required upon the hose such as skiving the outer cover or core tube.

Two types of hose couplings are currently in commercial use in the high pressure environment of six spiral wire reinforced hose. One of these is described for example in U.S. Patent No. 3,325,194. In this example, the outer cover of the hose must be removed or skived in order to achieve a suitable connection. In this arrangement a collet-type grip is achieved directly on the wire reinforcement when an outer sleeve is axially forced over axial split collet fingers which include internal gripping grooves therein. This type of coupling is reusable but includes the disadvantages of difficult to manufacture components and a difficult to assemble structure wherein separable components must be provisionally placed on a hose end in a proper orientation and then pressed into engagement with one another. The chief drawback however, is the requirement for skiving the cover of the hose.

Skiving is conventionally performed as an abrading process by a grinding wheel or the like where the hose must be supported and rotated in relation to the rotating wheel as well as being moved relative thereto to effect the proper depth of removal of material. Skiving is a difficult process, best preferred in a factory environment where close control can be maintained. In the field, inconsistent results often result, for example, where the cover is unevenly removed or even worse when the reinforcement is damaged. These effects result in inconsistent hose joints, which are especially noticeable in high pressure applications where such deviation cannot be tolerated. Skiving is a difficult, dirty, costly and inconsistent process but has been found to be necessary in current practice to achieve high pressure joints in the larger size hoses.

Another example of current practice is described in U.S. Patent No. 3,347,571. Here, in order to achieve a satisfactory grip upon the hose, both the outer cover and the core tube of the hose are skived so that a direct grip on the reinforcement structure can be made by the crimped shell and nipple of the coupling. Skiving the core tube is even more difficult than skiving the cover and even less control can be exercised over the process where damage to the reinforcement or removal of insufficient amounts cannot be readily viewed.

When a hose structure is skived, exposing the reinforcement, it is very common to have individual wire strands unwind from the hose structure. These strands are extremely stiff and make assembly of the hose joint prior to crimping, very difficult.

Skiving then, is a process which has been developed in an attempt to achieve high performance for critical coupling applications. There are prior art couplings in which high performance is attempted to be achieved in no-skive arrangements where direct engagement is made with the reinforcement structure of the hose through the retained cover member. One example of this is U.S. Patent No. 3,367,683 wherein a sturdy clamp structure is employed to drive gripping teeth into engagement with the reinforcement. This structure is costly and unwieldy and can be subject to inconsistent results, dependent upon the skill of the assembler and the proper assembly of the individual components.

Another form of prior art device is shown in U.S. Patent No. 4,150,466 wherein a particular form of barb is utilized in order to achieve penetration of the hose cover and engagement with the reinforcement. A plurality of sharp penetrating barbs is described, with penetration substantially into the reinforcement structure. This disrupts the integrity of the reinforcement and may produce attendant possible damage to the structure. The grip is achieved with a pointed, relatively small profile, distributed structure, which is of a difficult to manufacture, pyramid shape.

Another form of no-skive coupling which avoids penetration of gripping teeth into the reinforcement structure is shown in U.S. Patent No. 4,366,841. In this type of coupling in which the grip is also achieved by crimping the collar of the coupling, the gripping teeth are designed to accommodate the high crimp forces by bending upon engagement with the wire reinforcement. These gripping teeth are specially shaped for this purpose and are relatively slender in profile.

According to the invention there is provided a permanently attachable hose coupling for high pressure, reinforced hose, comprising a body member for connection to a fluid system, the body member having a passage therein for flow of hydraulic fluid, and a nipple on the body member, the nipple being of generally tubular configuration, having a bore therein in fluid communication with the passage in the body member, extending outwardly from the body member and having an inner end and an outer free end, characterised by an annular ridge on the periphery of the nipple, the ridge being spaced axially outwardly from the inner end of the nipple, a first shell on the body member, the first shell being a thin wall member having an inner portion supported on the body member, an outer portion of generally tubular configuration and a connecting portion joining the inner and outer portions, the outer shell portion surrounding the inner end of the nipple and the annular ridge thereon, and a second shell supported by the first shell, the second shell being of generally tubular configuration and surrounding the nipple to form an annular space therebetween, the second shell having alternate grooves and projections on the inner periphery thereof forming teeth for gripping a hose inserted in the annular space, the second shell being received in the first shell to form an overlapping shell band, and at least one of the projections being axially disposed in the shell band.

Such a hose coupling can be suitable for high pressure ranges in large coupling sizes, primarily where several layers of wire reinforcement are used in the hose structure.

The overlapping shell structure can cause said one of the projections to be forced further radially inwardly than the others thereof. The annular ridge on the outer periphery of the coupling nipple co-operates with said one of the projections to provide a pincer-grip upon the hose reinforcement.

Sealing of the hose structure is effected primarily at the axially outer portions of the nipple in co-operation with the gripping force provided by the remainder of the gripping projections.

With the hose coupling of the invention, the hose joint may be made through the cover of the hose, obviating the necessity for skiving or removal of the cover or even the core tube of the hose. The hose can be presented merely with a square-cut end, readily slipped into the coupling in the annular space provided and bottomed therein. Crimping of the hose collar in conventional apparatus for this purpose is facilitated in that the hose and coupling assembly are readily handled and are not required to be precisely aligned in the crimping apparatus as the grip upon the hose is inherently achieved by radial compression of the hose collar in a manner predetermined by the collar structure.

The invention is diagrammatically illustrated by way of example in the accompanying drawing, in which:-

Figure 1 is a sectional view of a hose coupling according to the invention with parts broken away, shown in relation to the end portion of a hose to be coupled therein; and

Figure 2 is a sectional view of the hose coupling of Figure 1 after the coupling has been crimped onto the hose.

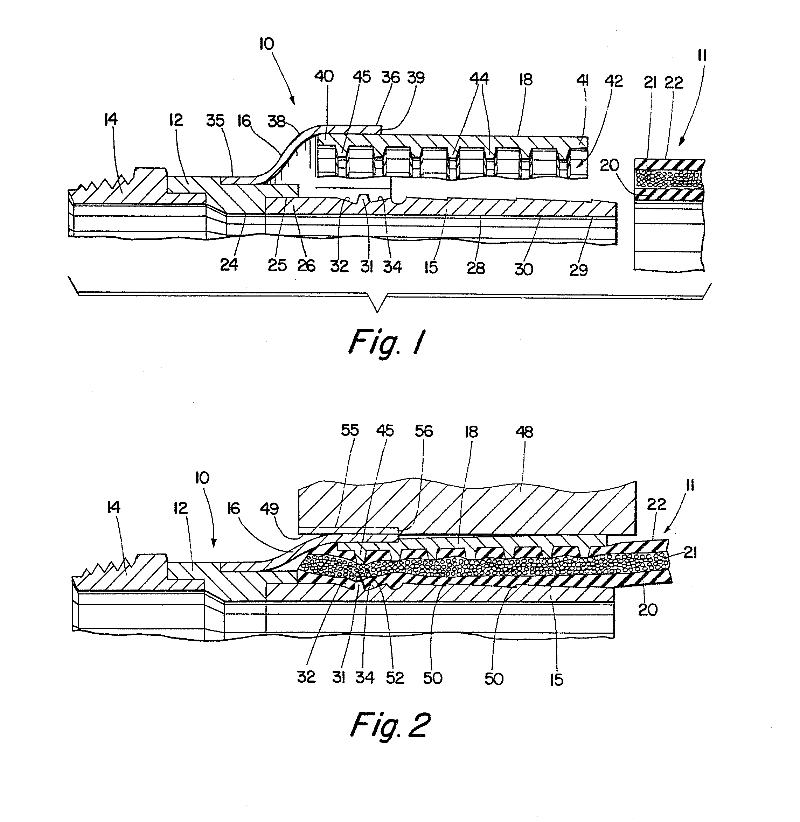

Referring to the drawing and firstly to Figure 1, a coupling 10 is shown in relation to the end portion of a length of hose 11 to which the coupling is to be affixed. The coupling comprises a body member 12, an adapter 14, a nipple 15, a first shell 16 and a second shell 18.

The hose 11 is a very high pressure flexible conduit comprising an elastomeric core tube 20, reinforcement 21 and an elastomeric cover 22. The hose 11 is known in the trade by the designation spiral hose 100R13 and has a construction in which the reinforcement 21 comprises six layers of wire laid in spirals over one another and over the core tube 20. The core tube 20 is an oil resistant synthetic rubber or elastomer as is the cover 22. Typical specifications for a hose 11 of this kind and thus for the coupling 10 as well, in the 5 cm size of the hose ID, are an operating pressure of $350 \text{ kgf/cm}^2$ proof pressure of $700 \text{ kgf/cm}^2$ and burst pressure of $1,400 \text{ kgf/cm}^2$.

The coupling 10 comprises components, which for the most part, are machined from steel and assembled as an integral unit for receipt of a hose end. The coupling 10 is designed primarily for use in field crimp applications, that is, in applications in which hose assemblies are made or repaired in other than a factory controlled environment. By crimping is meant the radial contraction of the shells 16, 18 toward the axial centreline of the coupling 10, by equipment which typically comprises a set of collet-like dies or the like which are in engagement with the shells and which are caused to be moved into a tapered bowl thereby to be radially contracted. Typically hydraulic power is used for the crimp operation and in the instance of the 5 cm coupling mentioned, such force requirement might be in the region of 100 tonnes.

The body member 12 of the coupling 10 is a generally tubular structure having a central passage 24 therein and as depicted in the drawing includes a recess 25 at the outer end thereof in which is received the inner end 26 of the nipple 15. The inner end 26 is secured to the body member 12 by brazing or the like or alternatively the body member 12 and the nipple 15 could be a unitary structure machined from a common length of stock material.

The nipple 15 is also a tubular structure having a centre portion 28, a free end 29 and a bore 30, the bore 30 being generally coaxial and in fluid communication with the passage 24 in the body member 12. The nipple 15 includes an annular ridge 31 near the inner end 26 thereof and annular grooves 32, 34 on either side of the ridge 31. The outer periphery of the nipple 15 is the sealing surface thereof and is placed into intimate contact with the inner core 20 of the hose 11 upon crimping of the coupling 10, to be described in greater detail hereinafter. The adapter 14 is also secured to the body member 12 in a fluid tight manner, as by brazing or the like, being received in a recess at the inner end of the body member 12. The adapter 14 may take many different configurations depending upon its intended application, but is designed to connect the coupling 10 to a system in which fluids are being transmitted. In the embodiment depicted the adapter 14 is a tubular member having a bore in communication with the passage 24 in the body member 12 and thus in communication with the bore 28 of the nipple 15. The adapter 14 includes a pipe thread on its outer periphery for connection to the fluid system.

The coupling 10 is completed by the first and second steel shells 16, 18 respectively. The first shell 16 is generally bell-shaped or funnel-shaped and includes an inner portion 35, an outer portion 36 and a connecting portion 38. The inner portion 35 is tubular in configuration in this embodiment and is received in a recess on the outer periphery of the body member 12, being secured by brazing or the like. The outer portion 38 is also generally tubular in shape and is supported preferably over the ridge 31 on the nipple 15 by the bell-shaped connecting portion 38. In this manner, a free end 39 of the shell 16 extends further axially outwardly than the ridge 31.

The second shell 18 also is generally tubular in shape but of slightly smaller diameter than the outer portion 36 of the first shell 16. The second shell 18 has an inner end 40 received in the outer portion 36 of the first shell 16 and supported thereby in concentric relation to the nipple 15. The outer end 41 of the second shell 18 is a free end and lies generally over or in general axial alignment with the free end 29 of the nipple 15. An annular space 42 is thus established between the second shell 18 and the nipple 15 for receipt of the end of the hose 11. A plurality of gripping teeth 44 are formed on the inner periphery of the second shell 18, the teeth 44 comprising alternate grooves and projections in the surface and in the illustrated embodiment of the invention are annular ridges or rings. Alternatively, the teeth 44 could comprise a spiral projection or a continuous ridge or ridges extending from the inner end 40 to the outer end 41 or could be circumferentially discontinuous, however strength considerations are important in the latter regard. The gripping teeth 44 are projections having sloping inner and outer walls and are relatively sturdy, having approximately the same axial width as the radial thickness of the second shell 18, so that a relatively rigid structure is provided. Preferably, the gripping teeth 44 are symmetrically disposed on the second shell 18 so that the shell 18 may be assembled in the first shell 16 in either direction without loss of integrity of the coupling.

As noted the second shell 18 is disposed in the first shell 16 so that an overlap or stacked shell section comprising the outer end 36 of the first shell 16 and the inner end 40 of the second shell 18 is established. The overlap section is arranged so that at least an innermost one 45 of the gripping teeth 44 is axially within the overlap section as well as the annular ridge 31 on the nipple 15. In the embodiment of the invention depicted in Figure 1, the innermost tooth 45 is slightly axially further inwardly than the annular ridge 31. All of the gripping teeth 44 project into the annular space 42 and the coupling parts are sized so that the end of the hose 11 may enter the annular space 42 relatively freely between the outer periphery of the nipple 15 and the radially inward surfaces of the teeth 44.

Referring now more particularly to Figure 2, the completed joint is depicted using the same reference numerals for corresponding parts. In completion of the joint, the hose 11 has been inserted into the coupling 10 until bottoming occurs between the end of the hose 11 and, for example, the outer end wall of the body member 12. The hose 11 is thus inserted substantially the full axial length of the annular space 42 and extends beyond the opposed annular ridge 31 and the innermost gripping tooth 45.

A collet die 48 is shown in engagement with the first and second shells 16, 18 to indicate how the coupling 10 is compressed to grip and lock the hose 11. The collet die 48 may be one of approximately eight dies which surround the coupling 10 and which move radially inwardly to effect a crimp operation. In this movement a collet edge 49 which is shown as a straight line generally parallel to the longitudinal axis of the coupling 10, has moved radially inward, remaining parallel to the longitudinal axis of the coupling 10, from a position initially contacting only the first shell 16 to that shown in Figure 2 wherein the edge 49 is in contact with and has deformed both the first shell 16 and the second shell 18. In this movement the shells 16, 18 have moved radially inward and, due somewhat to the collapse of the first shell 16, have moved axially outward as well relative to the nipple 15. This effect includes some extrusion of the material forming the shells 16, 18 in the axial direction, due to the great compression forces involved.

In the crimping movement of the shells 16, 18 described, the gripping teeth 44 have penetrated the cover 22, being dimensioned initially approximately the same or greater than the thickness of the cover 22, to engage the reinforcement structure 21 of the hose 11. Also during the crimping movement the inner core 20 of the hose 11 has been compressed into intimate engagement with the periphery of the nipple 15 and in so doing has caused the annular ridge 31 on the nipple 15 substantially fully to penetrate the inner core 20 to engage or come close to engagement with the reinforcement structure 21. The grooves 32, 34 on either side of the ridge 31 facilitate such penetration, allowing extrusion of the elastomeric material forming the inner core 20 thereinto. Further extrusion of the cover 22 and the core 20 material may be accommodated within the inner shell 16. An effective fluid seal is thus established between the inner core 20 and the outer periphery of the nipple 15 and shallow annular grooves 50 are provided in the peripheral surface of the nipple 15 to enhance the seal.

By virtue of the stacked shell arrangement between the outer end 36 of the first shell 16 and the inner end 40 of the second shell 18 and the fact that the collet die 48 has traversed only a radially inward, parallel movement, the innermost gripping tooth 45 has moved further radially inward toward the nipple 15 than has the remainder of the gripping teeth 44. As depicted, the innermost gripping tooth 45 has engaged the reinforcement 21 and has deformed the extremely rigid structure of the reinforcement 21 into a ripple 52, being enabled in this deformation by the presence of the grooves 32, 34 adjacent the ridge 31. In the final position depicted in Figure 2, the hose 11 is locked in a pincer-like grip between the innermost tooth 45 and the annular ridge 31, and further locked by compressive engagement of the remainder of the gripping teeth 44 directly upn the reinforcement 21. As noted slight ripples might occur in the reinforcement 21, between adjacent gripping teeth 44, however the reinforcement structure is not substantially penetrated nor detrimentally disturbed by this grip. The innermost gripping tooth 45 and the annular ridge 31 are preferably in substantial axial alignment upon completion of the crimp and preferably establish a metal-to-metal contact with the reinforcement 21.

The centre portion 28 of the nipple 15 is thicker than the inner end 26, especially at the grooves 32, 34, and thicker than the outer free end 29 to assist in the distribution of crimping forces throughout the coupling 10 and to prevent collapse of the bore 30 of the nipple 15.

While only a single innermost gripping tooth 45 has been depicted as wholly within the overlap section of the first and second shells 16, 18, a variation is possible wherein more than one of the gripping teeth 44 is positioned within the overlap section to co-operate with the annular gripping ridge 31 on the nipple 15. This description is intended to encompass this and other similar variations in the structures of the invention.

While the collet edge 49 is depicted as a straight edge in Figure 2 it is clear that modification could be made in the shape of this edge to modify the crimp configuration attained upon the coupling 10. Thus the edge 49 could include a radially outward step 55 therein, shown in dashed lines, in which the outer end 36 of first shell 16 would be received. The end 39 of the first shell 16 could be arranged to abut a shoulder 56 forming the step 55 in the collet 48 and thus serve as a device for locating the coupling 10 with respect to the collet die 48, to ensure an accurate crimp thereon. By appropriate selection of the depth of the step 55, relative to the thickness of the shell 16, 18, the depth of penetration of the innermost gripping tooth 45 can be determined relative to the penetration of the remainder of the gripping teeth 44.

**0125057**

## CLAIMS

1. A permanently attachable hose coupling for high pressure, reinforced hose, comprising

a body member (12) for connection to a fluid system, the body member (12) having a passage (24) therein for flow of hydraulic fluid, and

a nipple (15) on the body member (12), the nipple (15) being of generally tubular configuration, having a bore (30) therein in fluid communication with the passage (24) in the body member (12), extending outwardly from the body member (12) and having an inner end (26) and an outer free end (29), characterised by an annular ridge (31) on the periphery of the nipple, the ridge (31) being spaced axially outwardly from the inner end (26) of the nipple (15),

a first shell (16) on the body member (12), the first shell (16) being a thin wall member having an inner portion (35) supported on the body member, an outer portion (36) of generally tubular configuration and a connecting portion (38) joining the inner and outer portions, the outer shell portion (36) surrounding the inner end (26) of the nipple (15) and the annular ridge (31) thereon, and

a second shell (18) supported by the first shell (16), the second shell (18) being of generally tubular configuration and surrounding the nipple (15) to form an annular space (42) therebetween, the second shell (18) having alternate grooves and projections on the inner periphery thereof forming teeth (44) for gripping a hose (11) inserted in the annular space (42), the second shell (18) being received in the first shell (16) to form an overlapping shell band (36, 40), and at least one (45) of the projections being axially disposed in the shell band (36, 40).

2. A hose coupling according to claim 1, characterised in that the shell band (36, 40) is disposed over the annular ridge (31), said one projection (45) is disposed axially inwardly of or in substantial axial alignment with the annular ridge (31), said one projection (45) is annular, and the alternate grooves and projections are a series of rings on the inner periphery of the second shell (18).

3.    A hose coupling according to claim 2, characterised in that the annular space (42) is sufficiently large to receive the free end of a hydraulic hose (11) to be coupled thereto, which free hose end has an inner tube (20), wound reinforcement (21) thereover and an elastomeric cover (22).

4.    A hose coupling according to claim 2, characterised in that the connecting portion (35) of the first shell (16) is bell-shaped and interconnects the smaller diameter inner portion (35) and the larger diameter outer portion (36).

5.    A hose coupling joint comprising,
high pressure hose (11) having an elastomeric core tube (20), plural wire reinforcement layers (21) wound over the core tube (20) and an elastomeric cover (22) over the reinforcement layers (21),
a body member (12) for connection to a hydraulic system, the body member (12) having a fluid passage (24) therein, and
a tubular nipple (15) on the body member (12) in communication with the fluid passage (24), the nipple (15) having a free end (29) remote from the body member (12) inserted in the core tube (20),
characterised by a peripheral annular ridge (31) embedded in the core (20) tube,
a first shell member (16) supported on the body member (12), the first shell member (16) having an outer end (36) disposed over the annular ridge (31) on the nipple (15), and
a second shell member (18) of generally tubular configuration partially inserted in the first shell member (16) forming an overlap section (36, 40) of the first (16) and second (18) shell members, the overlap section (36, 40) overlying the annular ridge (31), and axially spaced gripping teeth (42) on the inner periphery of the second shell (18), the gripping teeth (44) being embedded in the hose cover (22) and being in engagement with the wire reinforcement (21) with at least one (45) of the gripping teeth (44) being in the overlap section (36, 40).

6.    A coupling joint according to claim 5, characterised in that said at least one (45) of the gripping teeth (44) is further embedded in the hose (11) than the remainder of the teeth (44).

7.    A coupling joint according to claim 5, characterised in that said at least one (45) of the gripping teeth (44) is disposed radially closer to the nipple (15) than the remainder of the teeth (44).

8.    A coupling joint according to claim 5, characterised in that the wire reinforcement (21) is distorted into a ripple at the overlap section (36, 40) and said at least one (45) of the gripping teeth (44) is disposed in a trough of the ripple.

9.    A coupling joint according to claim 5, characterised in that said at least one (45) of the gripping teeth (44) and the annular ridge (31) are in engagement with the wire reinforcement (21).

10.    A coupling joint according to claim 5, characterised in that said at least one (45) of the gripping teeth (44) is disposed in axial alignment and radially outwardly of the annular ridge (31).

11.    A permanently attached hose coupling joint, comprising
high pressure hose (11) having an elastomeric core tube (20), plural wire reinforcement layers (21) wound over the core tube (20) and an elastomeric cover (22) over the reinforcement layers (21), and
a tubular member (12, 15) having a peripheral surface thereon in embedded, sealing engagement with the core tube (20),
characterised by an annular ridge (31) on the periphery of the tubular member, the ridge (31) being substantially completely embedded in the core tube (20), and
an outer shell in crimped engagement with the hose (11), the outer shell comprising first (16) and second (18) thin wall members supported on the tubular member (12, 15), the first shell member (16) supporting the second shell member (18) in overlapping engagement therewith to form a thickened shell section (36, 40), the thickened shell section (36, 40) being spaced radially outwardly of the annular ridge (31) on the tubular member (12, 15), the second shell section (18) having axially spaced gripping ridges (44) on the inner periphery thereof, the gripping ridges (44) being substantially fully embedded in the hose cover (22) and in firm engagement with the wire reinforcement (21), one (45) of the gripping ridges (44) being in the

0125057

thickened shell section (36, 40) said one gripping ridge (45) being further radially inward than the others of the gripping ridges (44).

12. A coupling joint according to claim 11, characterised in that the tubular member (12, 15) includes a groove (32, 34) on either side of the annular ridge (31), thereby forming a reduced wall thickness of the tubular member, the tubular member having further grooves (50) on said peripheral thick wall section in the region of the further grooves (50).

13. A coupling joint according to claim 17, characterised in that the tubular member (12, 15) has a greater wall thickness at a central location at which the further grooves (50) are located, than at the location at which the grooves (32, 34) adjacent the ridge (31) are located and at the remote end (29) thereof, the shells (16, 18) are brazed together and to the tubular member (12, 15), adapter means (14) are connected to the tubular member (12, 15) for coupling to a hydraulic device, the gripping ridges (44) are annular ribs and are symmetrically disposed, and the hose reinforcement (21) comprises six layers of spiral wire.

0125057

*Fig. 1*

*Fig. 2*